(19) Europäisches Patentamt
European Patent Office
Office européen des brevets

(11) **EP 2 753 950 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(51) Int Cl.:
**G01S 7/03** (2006.01)  **G01S 13/34** (2006.01)
**G01S 13/42** (2006.01)  **G01S 13/93** (2020.01)
**H01Q 21/06** (2006.01)

(21) Anmeldenummer: **12769899.1**

(22) Anmeldetag: **04.09.2012**

(86) Internationale Anmeldenummer:
**PCT/EP2012/003702**

(87) Internationale Veröffentlichungsnummer:
**WO 2013/034282 (14.03.2013 Gazette 2013/11)**

(54) **ABBILDENDER RADARSENSOR MIT SYNTHETISCHER VERGRÖSSERUNG DER ANTENNENAPERTUR UND ZWEIDIMENSIONALER STRAHLSCHWENKUNG**

IMAGING RADAR SENSOR WITH SYNTHETIC ENLARGEMENT OF THE ANTENNA APERTURE AND TWO-DIMENSIONAL BEAM SWEEP

CAPTEUR DE RADAR IMAGEUR À GROSSISSEMENT SYNTHÉTIQUE DE L'OUVERTURE D'ANTENNE ET À BALAYAGE BIDIMENSIONNEL DU FAISCEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2011 DE 102011113015**

(43) Veröffentlichungstag der Anmeldung:
**16.07.2014 Patentblatt 2014/29**

(73) Patentinhaber: **Astyx GmbH**
**85521 Ottobrunn (DE)**

(72) Erfinder:
• **KÖRBER, Richard**
**91352 Hallerndorf (DE)**
• **HÖHNE, Felix**
**85609 Aschheim (DE)**

(74) Vertreter: **Berkenbrink, Kai-Oliver**
**Patentanwälte Becker & Müller**
**Turmstrasse 22**
**40878 Ratingen (DE)**

(56) Entgegenhaltungen:
**WO-A1-2010/066458    DE-A1-102004 044 120**
**DE-A1-102009 029 291    US-A1- 2011 080 314**

• **None**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft eine Vorrichtung und ein Verfahren zur Erhöhung der Winkelauflösung von abbildenden Radarsensoren bei begrenzt verfügbarer Antennenapertur.

Millimeterwellen-Radarsensoren, z. B. für automobile Anwendungen sollen eine kompakte und kostengünstige Bauweise vorweisen. Dies bedeutet, dass die verfügbare Fläche für die Antenne möglichst klein zu halten ist und die Anzahl der Hochfrequenz-Komponenten minimiert sein sollte.

Andererseits sollte der Sensor eine hohe Winkelauflösung vorweisen, welche jedoch eine große Antennenfläche, sogenannte Apertur, erfordert.

Dieser Konflikt der Anforderungen wird durch die folgende Erfindung vorteilhaft gelöst. Die Antennenapertur der Radarsensoren kann bei gleich bleibender Winkelauflösung dabei fast um den Faktor Zwei verkleinert werden.

Eine weitere Anforderung ist die Erkennung eines Stauendes auf der Fahrbahn. Hierbei sind stehende Fahrzeuge von Brücken und Gulli-Deckeln zu unterscheiden. Ferner ist eine dreidimensionale Vermessung der Objekte zur Objektklassifikation erwünscht. Diese Aufgabe wird vorteilhaft durch eine horizontale und vertikale Strahlschwenkung gelöst.

Aus der Dissertation von Dr. Winfried Mayer mit dem Titel "Abbildender Radarsensor mit sendeseitig geschalteter Gruppenantenne", Cuvillier Verlag, Göttingen 2008, ISBN 978-3-86727-565-1 ist ein Verfahren sowie eine Vorrichtung bekannt, welches mit der Technik der digitalen Strahlformung, bei denen ein Antennenarray mit mehreren Sendern und mehreren Empfängern eingesetzt wird, ein Gebiet überwacht.

Durch den zeitlich aufeinanderfolgenden Einsatz der Sender, kann der Antennenöffnungswinkel verkleinert werden, ohne dass dabei die physikalische Größe der Empfangsantenne zunimmt.

Bei Radarsensoren funktioniert dieses Verfahren gut, solange die zu detektierenden Objekte sich nicht bewegen und mehrere nahe beieinander liegende Objekte zu detektieren sind.

Die Objektbewegung verursacht in der Regel Abbildungsfehler, die Echos nahe beieinander liegender Objekte überlagern sich, was zu falschen und mehrdeutigen Abbildungen führen kann.

Aus der DE 10 2008 061 932 A1 ist ein Verfahren bekannt, bei der die Sendeantennen in Blickrichtung zum Objekt hinter den Empfangsantennen angeordnet sind. Die Objektbewegung kann durch diese Anordnung zwar korrigiert werden, jedoch ist diese Art der Antennenanordnung nicht vorteilhaft bezüglich der Abstrahlcharakteristik der Antennen.

In der DE 10 2008 052 246 A1 wird ein Sensorsystem mit verstellbarer Elevationsstrahlrichtung zur vertikalen Lagebestimmung von Objekten beschrieben. Die Verstellung erfolgt hierbei durch die mechanische Bewegung eines Reflektors.

In der Veröffentlichung "N.Kees. E.Schmidhammer and J.Detlefsen "Improvement of angular resolution of a millimeterwave imaging system by transmitter location multiplexing." in IEEE MTT-S Int. Microw. Symp. Dig., Orlando, FL. May 1995, vol.2, pp.969-972" wird ein Verfahren zur Erzeugung einer synthetischen Antennenapertur beschrieben, mit deren Hilfe die Antennenstrahlbreite reduziert und damit die Winkelauflösung verbessert werden kann.

Die Aufgabe der Erfindung ist, eine Vorrichtung, ein Verfahren sowie ein Radarsystem zur Verfügung zu stellen, womit die oben beschriebenen Abbildungsfehler vermieden werden. Ferner ist es Aufgabe der Erfindung eine Vorrichtung und ein Verfahren zur Verfügung zu stellen, mit dem eine vertikale Lage eines Objekts bestimmt werden kann.

Die Aufgaben werden mit den Merkmalen der unabhängigen Ansprüche gelöst.

Es wird eine Vorrichtung zur Bestimmung einer Position eines Objekts, insbesondere eines sich bewegenden Objekts, mit mindestens zwei schaltbaren Sendeantennengruppen bereitgestellt. Dabei weist jede Sendeantennengruppe Sendeantennen auf, die sich hinsichtlich ihrer Hauptstrahlrichtungen voneinander unterscheiden. Eine Empfangsantennenanordnung enthält eine Vielzahl von Empfangsantennen, die in einer von links nach rechts laufenden Reihe nebeneinander angeordnet sind bzw. in einer Reihe nebeneinander beginnend von einer ersten bis abschließend einer letzten Empfangsantenne.

Die Sendeantennengruppen sind so angeordnet, dass der Abstand zwischen zwei Sendeantennen gleicher vertikaler Strahlrichtung gleich dem Abstand der linken äußeren bzw. ersten Empfangsantennen von der rechten äußeren bzw. letzten Empfangsantenne oder gleich der Summe des Abstands der linken äußeren bzw. ersten Empfangsantennen von der rechten äußeren bzw. letzten Empfangsantenne und des Abstands von zwei benachbarten Empfangsantennen ist.

Dabei beziehen sich die Abstände jeweils auf die Schwerpunkte der Sendeantennen und Empfangsantennen und auf eine von rechts nach links laufende Richtung bzw. von der letzten bis zur ersten laufenden Richtung.

Die Aufteilung in Sendeantennengruppen bewirkt, dass, wenn sie zeitversetzt aktiviert werden, eine sogenannte synthetische Apertur erzeugt werden kann, die größer als die realen Aperturen ist. Beispielsweise ist die Anzahl der Empfänger bei zwei Sendeantennengruppen in der synthetischen Apertur doppelt so groß wie in der realen Apertur. Allerdings muss der Abstand der Sendeantennengruppen dabei sorgfältig gewählt sein. Mit der Vielzahl der Sendeantennengruppen kann somit die reale Apertur, und somit die Fläche der Gesamtantenne, relativ klein gehalten werden, wobei die Winkelauflösung durch die synthetische Apertur trotzdem hoch ist. Die geringe Fläche ist besonders wichtig für Anwendungen, in denen der zur Verfügung stehende Raum stark begrenzt ist, zum Beispiel bei Automobilanwendungen. Die unterschiedlichen Hauptstrahlrichtungen ermöglichen eine vertikale Strahlschwenkung, was ermöglicht, Falschziele, wie zum Beispiel Brücken, zu detektieren.

Bevorzugt weisen zumindest die äußeren Empfangsantennen jeweils mindestens drei parallel verlaufende Antennenzeilen auf. Eine mittlere der Antennenzeilen der Empfangsantennen bildet jeweils ein Phasenzentrum der Empfangsantenne und die Abstände beziehen sich jeweils auf die Schwerpunkte der Phasenzentren der Empfangsantennen. Mit mehreren Antennenzeilen pro äußerer bzw. letzter Empfangsantenne wird eine Amplitudenbelegung ermöglicht.

In einer Ausführungsform bezieht der Abstand zwischen zwei benachbarten Empfangsantennen sich auf Empfangsantennen, die jeweils mindestens drei parallel verlaufende Antennenzeilen aufweisen, und wobei eine mittlere der Antennenzeilen der Empfangsantennen jeweils ein Phasenzentrum der Gruppe bildet und sich die Abstände jeweils auf die Schwerpunkte der Phasenzentren der Empfangsantennen beziehen. Damit wird berücksichtigt, dass mehrere Empfangsantennen, die nebeneinander im äußeren Bereich der Reihe liegen, jeweils mehrere Antennenzeilen aufweisen.

Falls innenliegende Empfangsantennen nicht mehr als eine Empfangsantennenzeile aufweisen, sind diese besonders für die Detektion von Objekten im Nahbereich geeignet.

In einer Ausführungsform weisen die äußeren Sendeantennen jeweils mindestens drei parallel verlaufende Antennenzeilen auf, und eine mittlere der Antennenzeilen der Sendeantennen bildet jeweils ein Phasenzentrum der Gruppe und die Abstände beziehen sich jeweils auf die Schwerpunkte der Phasenzentren der Sendeantennen.

Bevorzugt ist zudem ein Frequenzgenerator zum Erzeugen von Signalen, welche von den Sendeantennen der erste Sendeantennengruppe in einem ersten Zyklus und von den Sendeantennen der zweiten Sendeantennengruppe in einem zeitlich danach folgenden zweiten Zyklus abgegeben werden, vorgesehen.

Dabei senden innerhalb eines Zyklus die Sendeantennen einer Sendeantennengruppe mit unterschiedlichen Hauptstrahlrichtungen zeitlich aufeinanderfolgend.

Gemäß einem weiteren Aspekt der Anmeldung umfasst die Vorrichtung zur Bestimmung einer Position eines Objekts im dreidimensionalen Raum, insbesondere eines sich bewegenden Objekts, mindestens zwei Sendeantennengruppen, eine Anzahl mehrerer in Reihe angeordneter Empfangsantennen, wobei die Sendeantennengruppen zueinander in einem Abstand D angeordnet sind, welcher dem Abstand der äußerst linken bzw. ersten Empfangsantenne zur äußerst rechten bzw. letzten Empfangsantenne entspricht. Alternativ kann ein Abstand D+dx gewählt werden, wobei dx der Abstand zwischen den einzelnen Empfangszeilen oder der Abstand zwischen den Phasenzentren der Empfangsantennengruppen ist.

Ansonsten können die Sendeantennen an einer beliebigen Position seitlich oder gegenüberliegend zu den Empfangsantennen angeordnet werden.

Ferner umfasst die Vorrichtung einen Frequenzgenerator zur Erzeugung von Signalen, welche von den Sendeantennen zeitlich aufeinanderfolgend abgegeben werden, mindestens eine Verarbeitungseinheit zur Durchführung mindestens einer Verknüpfung der von den Empfangsantennen abgegebenen Empfangssignale nach der Methode der digitalen Strahlformung zur Erzeugung eines gebündelten Antennenstrahls und zur Durchführung einer Geschwindigkeitskorrektur und/oder einer Entfernungskorrektur mittels einer zweidimensionalen FFT durch Vergleich von Ausgangssignalen der, dem gebündelten Antennenstrahl entsprechenden, sich überlagernden Antennenzeilen, und eine Wiedergabeeinrichtung zur Darstellung der Position des Objekts.

Das erfindungsgemäße Verfahren zur Bestimmung einer Position eines Objekts, insbesondere eines sich bewegenden Objekts, umfasst mindestens die Verfahrensschritte des Empfangs einer Folge von zeitlich aufeinanderfolgend gesendeten und am Objekt reflektierten Empfangssignalen durch eine Anzahl mehrerer in einer Reihe angeordneter Empfangsantennen, der Digitalisierung der Empfangssignale, der Verknüpfung der Empfangssignale nach der Methode der digitalen Strahlformung zu einem gebündelten Antennenstrahl, der Durchführung einer Geschwindigkeitskorrektur und einer Entfernungskorrektur mittels einer zweidimensionalen FFT (Fast Fourier Transformation) durch Vergleich von Ausgangssignalen von sich überlagernden Antennenzeilen oder durch eine Doppler-Korrektur-Matrix, welche dem gebündelten Antennenstrahl entsprechen, und der Darstellung der Position des Objekts.

Bei einer Anordnung der Sendeantennengruppen im Abstand D wird einerseits die Überlappung der äußerst rechts liegenden bzw. letzten Empfangsantennenzeile und der äußerst links liegenden bzw. ersten synthetischen Antennenzeile ermöglicht, aus welcher eine Phasenkorrekturmatrix zur Doppler-Korrektur abgeleitet werden kann. Falls die Sendegruppen im Abstand D+dx positioniert werden, erfolgt keine Überlappung von Empfangszeilen. Die Größe des synthetischen Arrays ist hier maximal. Um die Bildverzerrung durch die Bewegung von Objekten zu kompensieren, ist in diesem Falle eine geschwindigkeitsabhängige Phasenkorrektur der Range-Doppler-Matrix durchzuführen, welche sich aus dem zeitlichen Versatz der linken bzw. ersten und rechten bzw. letzten Sendesignale errechnet.

Die Position eines Objektes im Raum wird in der Entfernung durch den Frequenzversatz zwischen Sende- und Empfangssignal bestimmt. Die Position im Azimuth wird durch die digitale Strahlschwenkung des Empfänger-Arrays ermöglicht. Die vertikale Position wird durch den Einsatz von 3 Sendeantennen bestimmt, welche eine unterschiedliche vertikale Blickrichtung haben, nach Oben, zur Mitte und nach Unten. Die Sendeantennen werden dabei nacheinander geschaltet. Die Empfangssignale weisen unterschiedliche Amplituden auf, je nachdem welche der Sendeantennen für das Detektionsverfahren benutzt wurde. Durch Amplitudenvergleich der 3 Empfangsschritte kann nun die vertikale Position des Objekts bestimmt werden.

Die in den Unteransprüchen aufgeführten Merkmale und der jeweils beanspruchte Gegenstand stellen vorteilhafte Weiterbildungen dar.

Zweckmäßigerweise weist die Vorrichtung eine Anzahl von 8, 16 oder 32 Empfangsantennen auf.

Gemäß vorteilhafter Weiterbildung ist die Position des Objekts mittels der Wiedergabeeinrichtung über ein Antennendiagramm darstellbar.

In zweckmäßiger Weiterbildung wird zusätzlich zur Entfernungskorrektur eine Geschwindigkeitskorrektor durchgeführt.

Zur Erzielung einer höheren Winkelauflösung in einem Beobachtungswinkelbereich werden zweckmäßigerweise die Amplituden benachbarter Antennenstrahlen ausgewertet. Dies wird auch als "Sequential lobing" bezeichnet.

Zur Erzielung einer höheren Winkelauflösung werden zweckmäßigerweise die Summe und Differenz zweier benachbarter Antennenstrahlen ausgewertet (sog. Monopuls).

Nachfolgend werden Ausführungsbeispiele der Erfindung anhand von Figuren näher erläutert. Einander entsprechende Teile sind in allen Figuren mit den gleichen Bezugszeichen versehen. Dabei zeigen

Figur 1    schematisch die Funktionsblöcke eines Radarsensors;

Figur 2    die Anordnung der Antennen des Radarsensors;

Figur 3    die reale Apertur und die sich ergebene synthetische Anordnung gemäß einer ersten Ausführungsform und

Figur 4    die reale Apertur und die sich ergebene synthetische Anordnung gemäß einer zweiten Ausführungsform.

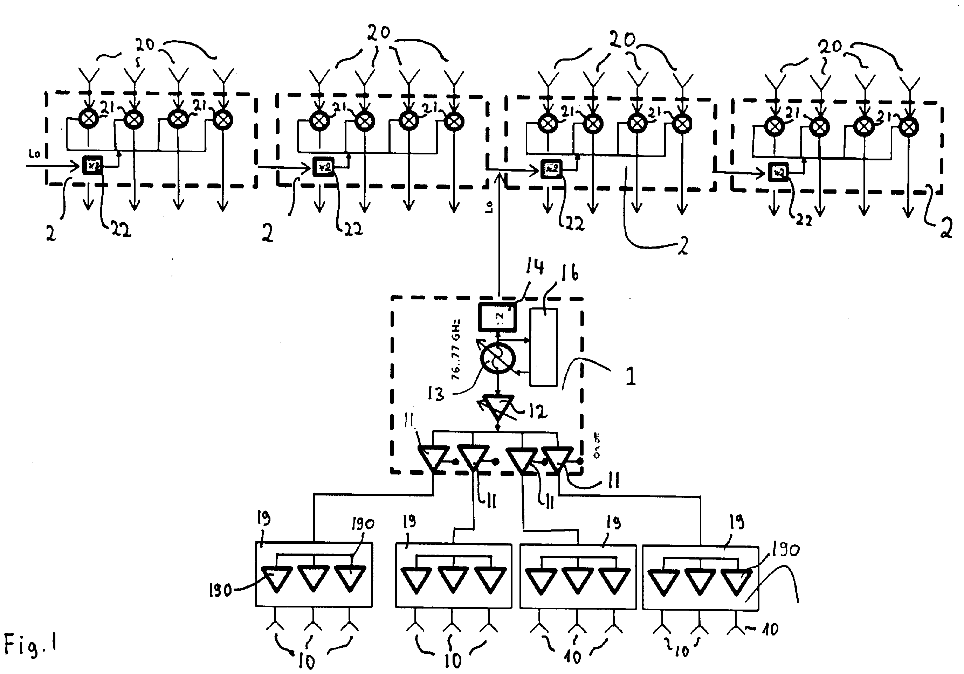

Die Erfindung betrifft ein frequenzmoduliertes Dauerstrich Radar (FMCW-Radar) nach Fig. 1, welches ein Gebiet mit Hilfe der digitalen Strahlformung überwacht. Der Radarsensor besteht dabei aus einem Sender mit zwölf Ausgängen und mehreren, in diesem Fall, sechszehn Empfängern. Fig. 1 zeigt einen Sender mit integriertem Frequenzmodulator und vier schaltbaren Ausgängen, vier Endverstärkern mit je drei schaltbaren Ausgängen und vier Empfängerblöcken mit je vier Empfangskanälen. In den Empfängerblöcken werden die Empfangssignale auf ein Basisband herabgemischt.

Figur 1 zeigt dabei einen Radarsensor mit einem Sender (1), vier Endverstärkern (19), zwölf Sendeantennen (10), vier Empfängerblöcke (2) und sechzehn Empfangsantennen (20). Der Sender (1) enthält einen Modulator (16), einen Frequenzgenerator (13), einen Frequenzteiler (14), einen einstellbaren Verstärker (12) sowie schaltbare Treiber (11). Der Frequenzgenerator (13) erzeugt ein Ausgangssignal, dessen Frequenz zwischen 76 bis 77 GHz variiert. Das Ausgangssignal wird an den Verstärker (12) ausgegeben, dessen Amplitude einstellbar ist. Das Ausgangssignal des Verstärkers (12) wird an die Eingänge von vier Treibern (11), die ein- und ausschaltbar sind, ausgegeben.

Die vier Endverstärker (19) weisen jeweils drei Treiberstufen (190) auf. Die Ausgänge der Treiber (11) sind mit den Eingängen der Treiberstufe (190) der Endverstärker (19) verbunden. Die Treiberstufen (190) wiederum treiben jeweils eine der Sendeantennen (10).

Der Frequenzgenerator (13) des Senders (1) gibt an seinem Ausgang auch ein Signal an den Frequenzteiler (14) aus, der ein Ausgangssignal ausgibt, das die halbe Frequenz des Ausgangssignals des Frequenzgenerators hat.

Die Empfängerblöcke 2 enthalten jeweils einen Frequenzmultiplizierer (22) und vier Mischer (21). Die Frequenzmultiplizierer (22) empfangen das Ausgangssignal des Frequenzteilers (14) des Senders (1), erzeugen jeweils ein Signal mit der doppelten Frequenz als ihr Eingangssignal, und geben jeweils ihre erzeugten Signale an erste Eingänge der Mischer (21) aus. Die Mischer (21) sind jeweils mit zweiten Eingängen mit jeweils einer Empfangsantenne (20) verbunden, so dass in dem Mischer (21) das von der jeweiligen Empfangsantenne (20) empfangene Signal auf ein Basisband herabgemischt wird. Die Ausgangssignale der Mischer (21) werden in einer Figur 1 nicht gezeigten Verarbeitungseinheit ausgewertet. Wenn Objekte erkannt sind, werden diese auf einer Wiedergabeeinheit optisch dargestellt.

Das Radar ist in der Lage, sowohl einen Fernbereich bis beispielsweise 200 m mit einem schmalen horizontalen Detektionsbereich von +-10 Grad als auch einen Nahbereich bis beispielsweise 80 m mit einem breiten Detektionsbereich von +-45 Grad zu vermessen.

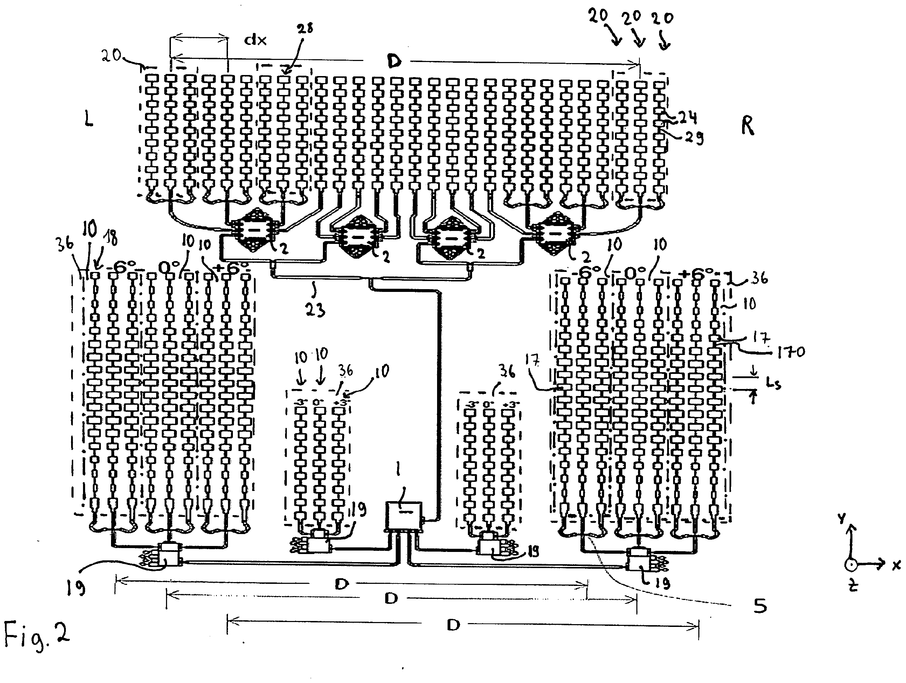

Fig. 2 zeigt die physikalische Anordnung der Antennen. Die äußeren Empfangskanäle sind mit Antennengruppen zu je drei Antennenzeilen verbunden. Die inneren Empfangskanäle sind nur mit einer einzelnen Antennenzeile verbunden.

Figur 2 zeigt dabei die Anordnung der Sendeantennen (10) und der Empfangsantennen (20) in der Draufsicht. Die Sendeantennen (10) und die Empfangsantennen (20) sind als Patchantennen ausgeführt, die sich in einer x-y-Ebene erstrecken. Die Empfangsantennen (20) weisen jeweils sogenannte Antennenzeilen (28) auf, die aus jeweils neun Empfangsstrahlelementen (24) und dazwischen liegenden Verbindungsleitungen (29) bestehen.

Die Empfangsstrahlelemente (24) einer Antennenzeile (28) sind hintereinander aufgereiht, so dass die Antennenzeile (28) länglich ist und sich in y-Richtung erstreckt. Die Antennenzeilen (28) der Empfangsantenne (20) verlaufen alle parallel zueinander und befinden sich auf gleicher Höhe in Bezug auf die y-Richtung. Die Antennenzeilen (28) sind somit im Bezug auf die x-Richtung nebeneinander angeordnet, wobei die äußere Antennenzeilen als rechte bzw. letzte Antennenzeile (28) beziehungsweise als linke bzw. erste Antennenzeile (28) bezeichnet werden.

Die z-Richtung zeigt aus dem Zeichnungsblatt nach oben. Die z-Richtung ist die Hauptrichtung, in der Gegenstände detektiert werden sollen. Wenn beispielsweise der Radarsensor in einem Landfahrzeug montiert ist und Gegenstände in Fahrtrichtung detektieren soll, ist die z-Richtung die Fahrtrichtung. Die y-Richtung zeigt dann nach oben. In der Figur ist rechts mit R und links mit L gekennzeichnet. Dabei ist der Blick entgegen der z-Richtung und somit gegen die Fahrtrichtung gerichtet.

Die Antennenzeilen (28) weisen jeweils einen Einspeisepunkt auf, mit dem sie über eine Streifenleitung (23) mit einem Eingang des Empfängerblocks (2) verbunden sind. Auf der linken Seite sind drei Empfangsantennen (20) vorgesehen, die jeweils drei Antennenzeilen (28) enthalten. Ebenso aufgebaut sind auf der rechten Seite drei Antennen (20) mit jeweils ebenfalls drei Antennenzeilen (28). Zehn Empfangsantennen (20) im mittleren Bereich enthalten jeweils nur eine Antennenzeile (28), sodass dort jeweils nur eine Antennenzeile (28) über seinen jeweiligen Einspeisepunkt mit einem Eingang eines Empfängerblocks (2) verbunden ist.

Die Sendeantennen (10) unterteilen sich dabei in vier Sendeantennengruppen (36), wobei zwischen zwei inneren und zwei äußeren Sendeantennengruppen (36) zu unterscheiden ist. Die äußeren bzw. letzten Antennengruppen (36) enthalten jeweils drei Antennen (10), die ihrerseits jeweils drei Antennenzeilen (18) enthalten. Die inneren Antennengruppen (36) weisen jeweils drei Antennen (10) auf, die jeweils aber nur eine Antennenzeile (18) enthalten.

Die Antennenzeilen (18) weisen jeweils Senderstrahlelemente (17) und dazwischen liegende Verbindungsleitungen (170) auf. Die Senderstrahlelemente (17) einer Antennenzeile (18) sind hintereinander aufgereiht, sodass die Antennenzeile (18) länglich ist und sich in y-Richtung erstreckt. Die Antennenzeilen (18) verlaufen alle parallel zueinander.

Die Antennenzeilen (18) einer Sendeantenne (10) der äußeren Sendeantennengruppe (36) enthalten jeweils achtzehn Senderstrahlelemente (17). Jeder der drei Antennenzeilen (18) einer Sendeantenne (10) der äußeren Sendeantennengruppe (36) weist einen Einspeisepunkt auf, der mit den anderen Einspeisepunkten der Antennenzeilen (18) der gleichen Sendeantenne (10) über Streifenleitungen (23) verbunden ist. Der entsprechende Verbindungsknoten wird von einer Treiberstufe eines Endverstärkers (19) getrieben. Die Senderstrahlelemente der äußeren Sendeantennengruppe (36) sind unterschiedlich gestaltet, womit eine Amplitudenbelegung realisiert wird.

Innerhalb der äußeren rechten bzw. letzten Sendeantennengruppe (36) und der äußeren linken bzw. ersten Sendeantennengruppe (36) sind somit jeweils drei Antennen (10) vorgesehen, wobei sich die Antennen innerhalb der Sendegruppen (36) jeweils hinsichtlich der Hauptstrahlrichtung und somit hinsichtlich ihrer vertikalen Strahlrichtung unterscheiden.

Die inneren Sendeantennengruppen (36) weisen jeweils drei Sendeantennen (10) auf, die ihrerseits jeweils neun Strahlenelemente (17) enthalten. Für jede Sendeantennengruppe (36) gibt es jeweils einen Endverstärker (19) mit drei Treiberstufen (190), an die jeweils eine Antenne (10) angeschlossen ist. Die Sendeantennen (10) der inneren Sendeantennengruppen (36) unterscheiden sich jeweils auch durch ihre jeweiligen Neigungen. Die linke Antenne (10) der inneren Sendeantennengruppe (36) schielt 3 Grad nach unten, die mittlere Antenne (10) weist keinen Schrägblick auf und die rechte Antenne (10) der inneren Sendeantennengruppen (36) weist einen Schrägblick um 3 Grad nach oben auf.

Der Abstand der Sendeantenne (10), die um 6 Grad nach unten schielt, der linken äußeren Sendeantennengruppe (36) zu derjenigen Antenne (10), die zur rechten Sendeantennengruppen (36) gehört und 6 Grad nach unten schielt, beträgt D. Der gleiche Abstand besteht auch zwischen Sendeantennen (10) zwischen der linken bzw. ersten Sendeantennengruppe (36) und der rechten bzw. letzten Sendeantennengruppe (36), die beide keinen Schrägblick aufweisen, und zwischen den Sendeantennen (10), die beide einen Schrägblick von 6 Grad nach oben aufweisen.

Die Antennengruppen, d.h. die Zusammenfassung von mehreren Antennenzeilen zu einer Empfangsantenne, werden benötigt, um die Strahlbündelung im FernbereichsMode zu erhöhen. In diesem Mode sind alle Empfängerkanäle aktiviert. Es gibt allerdings Ausführungsformen, in dem die Anzahl der Antennenzeilen nicht drei ist. Die zentrische der Antennenzeilen einer Antenne wird als Phasenzentrum bezeichnet.

Im Nahbereichsmode werden nur die inneren Einzelzeilen verwendet. Im Gegensatz zu den Antennengruppen, liegen hier die Phasenzentren der Empfänger näher beieinander, sodass eine breite Strahlschwenkung möglich ist. Das Empfangsantennenarray hat typischerweise eine vertikale Beambreite von 10 Grad. Der Sender verwendet ebenfalls Antennengruppen für den Fernbereich und Einzelzeilen für den Nahbereich. Die Antennengruppen und die Einzelzeilen sind so ausgelegt, dass sie den jeweiligen Detektionsbereich optimal ausleuchten.

Im Fernbereichsmode werden die jeweils äußeren drei Antennengruppen verwendet, im Nahbereichsmode die innenliegenden Einzelzeilen. Der Sender hat im Fernbereichsmode eine vertikale Strahlbreite von typ. 5 Grad und im Nahbereichsmode eine Strahlbreite von 10 Grad.

Um die vertikale Position von Objekten zu bestimmen, sind die Antennengruppen bzw. die Einzelzeilen so ausgelegt, dass die Hauptstrahlrichtung des vertikalen Diagramms einer Antenne oder Antennengruppe um typischerweise 6 Grad nach oben ausgerichtet ist, die zweite Antenne keinen Schrägblick aufweist und die dritte Antenne um 6 Grad nach unten schielt.

Das Schielen der Antennen wird dadurch erreicht, dass der Abstand L zwischen den einzelnen Strahlelementen vergrößert oder verkleinert wird. Der Abstand Ls bei der um den Winkel θ schielenden Antenne kann näherungsweise durch die Formel

$$Ls := \frac{L}{1 + \sin(\theta)}$$

beschrieben werden. Dabei ist L der Abstand zwischen einem ersten Strahlelement und einem zweiten Strahlelement. Der Abstand zwischen dem zweiten und einem dritten Strahlelement ist dann Ls.

Die Hauptarraystrahlrichtungen unterscheiden sich bezüglich y-Richtung. Der Winkel θ ist der Winkel zwischen der z-Achse und der Hauptstrahlrichtung der Sendeantenne. Je größer der Winkel θ ist, umso größer ist der vertikale Anteil der Strahlrichtung.

Um die Objektposition in der Vertikalen zu bestimmen, werden von Messzyklus zu Messzyklus die nach unten, zur Mitte und nach oben blickende Sendeantenne nacheinander aktiviert. Objekte, welche in jedem Zyklus mit der gleichen Geschwindigkeit und Entfernung auftreten, werden miteinander verglichen. Aus dem Amplitudenverhältnis lässt sich die Objekthöhe bestimmen. Das Verfahren wird als "sequential lobing" bezeichnet.

Die vertikale Strahlschwenkung ist wichtig, um Falschziele wie Brücken und so weiter zu detektieren und um eine Autokalibrierung beim Einbau und bei Änderung des Beladungszustands des Fahrzeugs durchzuführen.

Um die Antennenapertur in der Horizontalen künstlich zu einer sogenannten synthetischen Apertur (englisch: synthetic aperture) zu erweitern, wird während eines Messzyklus von Modulationsperiode zu Modulationsperiode alternierend die linke Antennengruppe und die rechte Antennengruppe aktiviert.

Der Ablauf der Messung sieht beispielsweise folgendermaßen aus: Zunächst wird in einem ersten Messzyklus zunächst die linke Antenne der linken bzw. ersten Sendeantennengruppe und anschließend die linke Antenne der rechten bzw. letzten Sendeantennengruppe aktiviert. In einem darauffolgenden zweiten Messzyklus wird zunächst die mittlere Antenne der linken bzw. ersten Sendeantennengruppe und anschließend die mittlere Antenne der rechten bzw. letzten Sendeantennengruppe aktiviert und in einem darauffolgenden dritten Messzyklus wird zunächst die rechte Antenne der linken bzw. ersten Sendeantennengruppe und anschließend die rechte bzw. letzten Antenne der rechten Sendeantennengruppe aktiviert. Nach dem dritten Messzyklus schleift das Verfahren wieder zu dem ersten Messzyklus zurück. Während einer Aktivierung wird die Frequenz des Senders gemäß dem FMCW (frequency modulated continuous wave) variiert.

Es ist aber auch alternativ möglich, dass in einer ersten Phase nacheinander die linke, die mittlere und die rechte Sendeantenne der linken bzw. ersten Sendeantennengruppe und anschließend nacheinander die linke, die mittlere und die rechte Sendeantenne der rechten bzw. letzten Sendeantennengruppe aktiviert werden.

Es wird darauf hingewiesen, dass die vertikale Schwenkbewegung in der Anwendung des Radars für den Fernbereich nicht oft durchgeführt werden muss, da die Objekte noch relativ weit vom Radarsensor entfernt sind.

Die linke bzw. erste Sendeantennengruppe und die rechte bzw. letzte Sendeantennengruppe sind dabei wie in Fig. 2 dargestellt im Abstand D zueinander angeordnet. Dabei ist der Abstand der Sendantennengruppen mit gleicher Strahlrichtung gleich D, wobei der Abstand jeweils von dem Schwerpunkt jeweiligen Sendeantennengruppe gemessen wird. In diesem Fall befindet sich der Schwerpunkt in dem Phasenzentrum, das jeweils die mittlere der Antennenzeilen ist. Der Abstand D entspricht dem Abstand zwischen dem Phasenzentrum der äußerst linken bzw. ersten Empfangsantenne und dem Phasenzentrum des äußerst rechten bzw. letzten Empfangsantenne.

Die Position der Sendeantennenanordnung muss nicht zwangsweise, wie in Fig. 2 dargestellt, dem Empfangsantennenarray gegenüberliegen. Die Sendeantennen können an beliebiger Stelle auch links und rechts bzw. unmittelbar angrenzend zum Empfangsarray angeordnet werden. Dies ist insbesondere dann sinnvoll, wenn die Einbauhöhe des Sensors reduziert werden soll, beispielsweise wenn der Sensor in der Stoßstange eines Fahrzeugs montiert wird.

Die Signale der Empfänger werden zunächst digitalisiert und dann nach der Methode der "digitalen Strahlformung" miteinander verknüpft, sodass sich ein gebündelter Antennenstrahl bildet, welcher einem Antennenarray von 2 mal 16 Antennenzeilen entspricht. Durch geeignete Phasenverschiebung und Gewichtung der Empfangssignale der Einzelzeilen lässt sich dieser gebündelte Strahl in Richtung des gewünschten Beobachtungswinkel ausrichten. Das Verfahren ist in der Literatur als "forward looking SAR" bekannt.

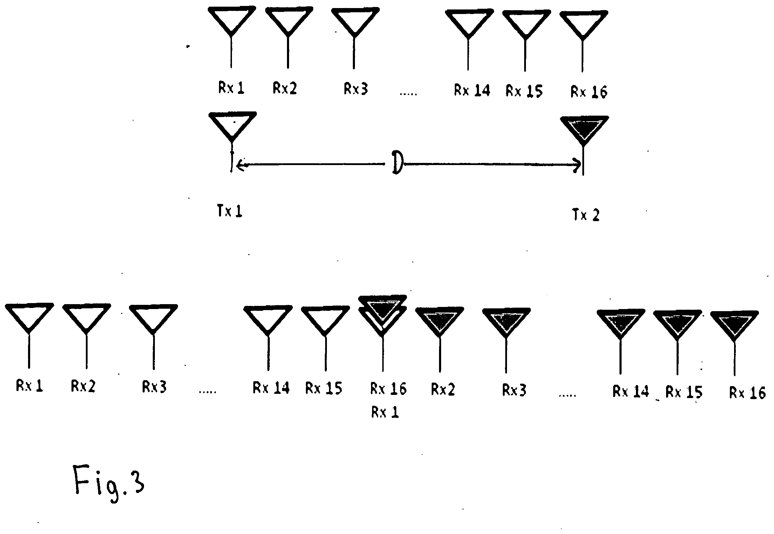

Figur 3 zeigt in der oberen Abbildung die reale Apertur und in der unteren Abbildung die synthetische Anordnung des Radars.

Eine Besonderheit dieser Anordnung ist, dass eine reale und eine synthetische Antennenzeile übereinander zum liegen kommen. Daraus lässt sich die Forderung ableiten, dass diese beiden Antennenzeilen die gleichen Signale empfangen müssen.

Bei bewegten Objekten ist dies jedoch nicht der Fall, da diese bedingt durch den zeitlichen Versatz der beiden nacheinander empfangenen Signale unterschiedliche Positionen einnehmen können. Das gleiche gilt auch für unterschiedliche Modulationszustände und für Phasenverschiebungen, welche durch die physikalischen Eigenschaften der verwendeten funktionalen Baugruppen verursacht sein können. Diese Verschiebungen führen zu Verzerrungen und falschen Abbildungen im Radarbild.

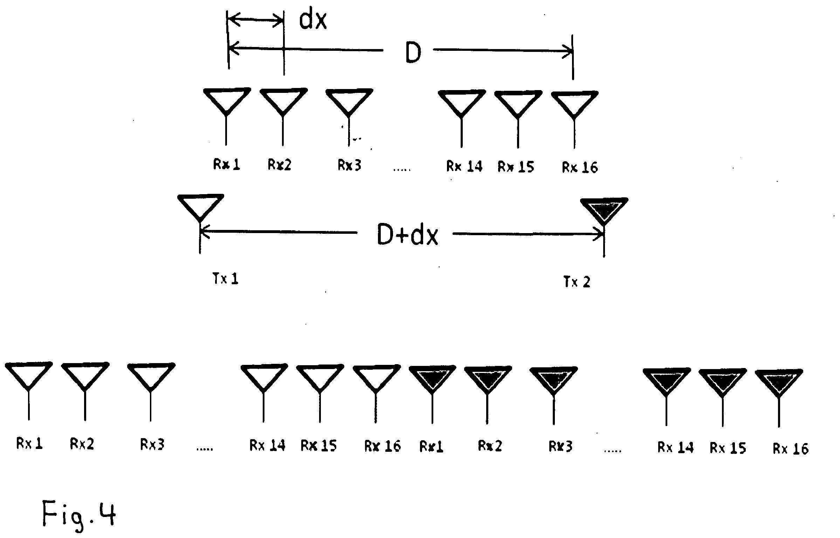

Wie aus der DE 10 2008 061 932 A1 bekannt, können aus den Signalen der übereinander liegenden Empfangskanäle Korrekturfaktoren für die digitale Strahlformung ermittelt werden. Die dazu nötige Signalverarbeitungsprozedur wird ebenfalls in der DE 10 2008 061 932 A1 beschrieben. Figur 4 zeigt die Aperturen für eine zweite Ausführungsform des Radars, wobei die Abbildung oben die reale Apertur und die Abbildung unten die synthetische Apertur darstellt. Die Sender werden gemäß einer zweiten Ausführungsform in einem Abstand D+dx angeordnet. Dies bedeutet, dass der Abstand zwischen den Sendeantennen mit paralleler Hauptstrahlrichtung der äußeren Sendeantennengruppen gleich D + dx ist.

Dabei ist dx der Abstand der zwei Empfangsantennen, in diesem Fall zwischen Phasenzentren nebeneinander liegenden äußeren Empfangsantennen. Es ergibt sich ein synthetisches Array, wie es in Fig. 4 dargestellt ist. Die Antennenapertur wird dann optimal ausgenutzt.

Allerdings können nun keine Korrekturfaktoren aus den Signalen von sich überlappenden Antennenzeilen gewonnen werden. In diesem Fall ist eine geschwindigkeitsabhängige Doppler-Korrektur zu berechnen, um die Phasenverschiebung der Empfangssignale durch die Objektbewegung zu kompensieren. Diese Phasenverschiebung kann aus dem bekannten Zeitversatz zwischen der Aktivierung des linken bzw. ersten und rechten bzw. letzten Senders sowie der Objektgeschwindigkeit berechnet werden. Die Objektgeschwindigkeit ist aus der sog. Range-Doppler-Matrix bekannt. Die Range-Doppler-Matrix erfüllt die Funktion eines mehrkanaligen Doppler-Filters. Für jedes Einzelfilter ist nun die Signalphase um den Wert $\Delta\phi$ nach der Formel

$$\Delta\phi \;:= 2 \cdot \pi \cdot \mathrm{ldopp} \cdot \delta\mathrm{fd} \cdot \Delta\mathrm{T}$$

mit Idopp: Doppler-Filter-Nr.

$\delta$fd: Bandbreite des Doppler-Filters

$\Delta$T: Zeitversatz zwischen der Aktivierung des linken bzw. ersten und des rechten bzw. letzten Senders

zu korrigieren.

In einer weiteren Ausführung können weitere Senderantennengruppen hinzugefügt werden, wobei der Abstand zwischen einer weiteren und einer schon vorhandenen Sendeantennengruppe jeweils D oder D+dx beträgt. Das synthetische Array vergrößert sich dann damit jeweils äquivalent.

## Bezugszeichenliste

| | |
|---|---|
| 1 | Sender |
| 2 | Empfängerschaltung |
| 10 | Sendeantenne |
| 11 | Treiber |
| 12 | Verstärker |
| 13 | Frequenzgenerator |
| 14 | Frequenzteiler |
| 16 | Modulator |
| 17 | Sendearrayelement |
| 18 | Endtreiber |
| 19 | Treiberstufe |
| 20 | Empfangsantenne |
| 21 | Mischer |
| 22 | Frequenzmultiplizierer |
| 23 | Streifenleitung |
| 24 | Empfangstrahlelement |
| 28 | Antennenzeile |
| 36 | Sendeantennengruppe |

## Patentansprüche

1. Vorrichtung zur Bestimmung einer Position eines Objekts, insbesondere eines sich bewegenden Objekts, mit

 - mindestens zwei schaltbaren Sendeantennengruppen (36), wobei jede Sendeantennengruppe (36) mehrere Sendeantennen (10) aufweist, die sich hinsichtlich ihrer Hauptstrahlrichtungen voneinander unterscheiden,
 - einer Empfangsantennenanordnung mit einer Vielzahl von Empfangsantennen (20),
 wobei die Sendeantennen (10) und die Empfangsantennen (20) als Patchantennen ausgeführt sind, die sich innerhalb einer X-Y-Ebene erstrecken, wobei sich die Hauptstrahlrichtungen der Sendeantennen (10) bzgl. der Y-Richtung unterscheiden, und wobei die Empfangsantennen (20) in X-Richtung in einer laufenden Reihe nebeneinander beginnend von einer ersten bis zu einer letzten angeordnet sind, wobei die Sendeantennengruppen (36) so angeordnet sind, dass der Abstand zwischen zwei Sendeantennen (10) gleicher Hauptstrahlrichtung bzgl. der Y-Richtung
 - gleich dem Abstand (D) der ersten Empfangsantennen (20) von der letzten Empfangsantenne (20) ist, oder
 - gleich der Summe des Abstands (D) der ersten Empfangsantennen (20) von der letzten Empfangsantenne (20) und des Abstands (dx) von zwei benachbarten Empfangsantennen (20) ist, wobei die Sendeantennen (10) an einer beliebigen Position seitlich oder gegenüberliegend zu den Empfangsantennen (20) innerhalb der X-Y-Ebene angeordnet sind, wobei
die Abstände sich jeweils auf die Phasenzentren der Sendeantennen (10) und Empfangsantennen (20) und sich jeweils auf eine von der letzten zur ersten laufende Richtung beziehen.

2. Vorrichtung nach Anspruch 1, wobei zumindest die äußeren Empfangsantennen (20) jeweils mindestens drei in Y-Richtung parallel verlaufende Antennenzeilen (28) aufweisen, und wobei eine mittlere der Antennenzeilen (28) ein Phasenzentrum der jeweiligen Empfangsantenne (20) bildet, welches als Bezugspunkt der Abstände dient.

3. Vorrichtung nach einem der Ansprüche 1 bis 2, wobei der Abstand zwischen zwei benachbarten Empfangsantennen (20) sich auf Empfangsantennen (20) bezieht, die jeweils mindestens drei in Y-Richtung parallel verlaufende Antennenzeilen (28) aufweisen, wobei eine mittlere der Antennenzeilen (28) ein Phasenzentrum jeweiligen Empfangsantenne (20) bildet, welches als Bezugspunkt der Abstände dient.

4. Vorrichtung nach Anspruch 3, wobei innenliegende Empfangsantennen (20) nicht mehr als eine Empfangsantennenzeile (28) aufweisen.

5. Vorrichtung nach einem der Ansprüche 1 bis 4, wobei zumindest die äußeren Sendeantennen (10) jeweils mindestens drei in Y-Richtung parallel verlaufende Antennenzeilen (18) aufweisen, und wobei eine mittlere der Antennenzeilen (18) ein Phasenzentrum der jeweiligen Sendeantenne (10) bildet, welches als Bezugspunkt der Abstände dient.

6. Vorrichtung nach einem der Ansprüche 1 bis 5, mit einem Frequenzgenerator (13) zum Erzeugen von Signalen, welche von den Sendeantennen (10) einer ersten Sendeantennengruppe (36) in einem ersten Zyklus und von den Sendeantennen (10) einer zweiten Sendeantennengruppe (36) in einem zeitlich danach folgenden zweiten Zyklus abgegeben werden.

7. Vorrichtung nach Anspruch 6, wobei innerhalb der Zyklen jeweils die Sendeantennen (10) einer Sendeantennengruppe (36) mit unterschiedlichen Hauptstrahlrichtungen zeitlich aufeinanderfolgend senden.

8. Vorrichtung nach einem der Ansprüche 1 bis 7, **gekennzeichnet durch** eine Anzahl von 8, 16 oder 32 Empfangsantennen.

9. Vorrichtung nach einem der vorhergehenden Ansprüche, **dadurch gekennzeichnet, dass** sowohl Sende- als auch Empfangsantennen zu Antennengruppen zusammengefasst sind.

10. Vorrichtung nach einem der vorhergehenden Ansprüche, mit einer Wiedergabevorrichtung zum Darstellen der Position des Objekts.

11. Radarsystem mit einer Vorrichtung zur Bestimmung einer Position eines Objekts nach einem der vorhergehenden Ansprüche.

12. Verfahren zur Bestimmung einer Position eines Objekts, insbesondere eines sich bewegenden Objekts, unter Verwendung mit einer Vorrichtung gemäß zumindest einem der vorhergehenden Ansprüche 1-10, umfassend den Verfahrensschritten:

   - Empfang einer Folge von zeitlich aufeinanderfolgend von Sendeantennen der Vorrichtung mit unterschiedlicher Hauptstrahlrichtung gesendeten und am Objekt reflektierten Empfangssignalen durch eine Anzahl mehrerer in einer Reihe angeordneter Empfangsantennen der Vorrichtung,
   - Digitalisierung der Empfangssignale,
   - Verknüpfung der Empfangssignale nach der Methode der digitalen Strahlformung zu einem gebündelten Antennenstrahl,
   - Durchführung einer Geschwindigkeitskorrektur und einer Entfernungskorrektur mittels einer zweidimensionalen FFT durch Vergleich von Empfangssignalen von denjenigen Antennenzeilen oder durch eine Doppler-Korrektur-Matrix, welche dem gebündelten Antennenstrahl entsprechen,
   - Amplitudenvergleich der Empfangssignale bei unterschiedlicher Hauptstrahlrichtung des Senders mit gleichem Entfernungswert und gleichem Geschwindigkeitswert, und
   - Darstellung der Position des Objekts.

13. Verfahren nach Anspruch 12, **dadurch gekennzeichnet, dass** zusätzlich zur Entfernungskorrektur eine Geschwindigkeitskorrektor durchgeführt wird.

14. Verfahren nach Anspruch 12 oder 13, **dadurch gekennzeichnet, dass** zur Erzielung einer höheren horizontaler Winkelauflösung in X-Richtung in einem Beobachtungswinkelbereich die Amplituden benachbarter Antennenstrahlen ausgewertet werden.

15. Verfahren nach einem der Ansprüche 12 bis 14, **dadurch gekennzeichnet, dass** zur Erzielung einer höheren horizontalen Winkelauflösung in X-Richtung die Summe und Differenz zweier benachbarter Antennenstrahlen ausgewertet werden.

## Claims

1. A device for determining a position of an object, in particular a moving object, comprising

    - at least two switchable transmitting antenna arrays ( 36 ), each transmitting antenna array ( 36 ) having a number of transmitting antennas ( 10 ) which differ from one another as regards their main beam directions,
    - a receiving antenna arrangement comprising a plurality of receiving antennas ( 20 ), wherein the transmitting antennas (10) and the receiving antennas (20) are made in the form of patch antennas which extend in an x-y-plane, wherein the main beam directions of transmitting antennas ( 10 ) differ from one another as regards the y-direction and wherein the receiving antennas (2) in x-direction are arranged next to one another in a continuous row starting from a first and ending at a last, the transmitting antenna arrays ( 36 ) being arranged such that the distance between two transmitting antennas ( 10 ) with the same main beam direction as regards the y-direction
    - is equal to the distance (D) between the first receiving antennas ( 20 ) and the last receiving antenna ( 20 ) or
    - is equal to the sum of the distance (D) between the first receiving antennas ( 20 ) and the last receiving antenna ( 20 ) and of the distance (dx) between two adjacent receiving antennas ( 20 ),

    wherein the transmitting antennas (10) are arranged in any position to the side of opposite the receiving antennas (20) within the x-y-plane, wherein the distances respectively relating to the focal points of the transmitting antennas ( 10 ) and the receiving antennas ( 20 ) and respectively to a direction running from the last to the first.

2. The device according to claim 1, at least the outer receiving antennas ( 20 ) respectively having at least three lines of antennas ( 28 ) running parallel in Y-direction, and a middle line of the lines of antennas ( 28 ) of the receiving antennas ( 20 ) respectively forming a phase center, and wherein a middle line of the lines of antennas ( 28 ) forming a phase center of the respective receiving antenna ( 20 ), serving as a reference point for the distances.

3. The device according to one of claims 1 or 2, the distance between two adjacent receiving antennas ( 20 ) relating to receiving antennas ( 20 ) which respectively have at least three lines of antennas ( 28 ) running parallel in Y-direction, and a middle line of the lines of antennas ( 28 ) of the receiving antennas ( 20 ) respectively forming a phase center, serving as a reference point for the distances.

4. The device according to claim 3, lines of receiving antennas ( 20 ) lying on the inside having no more than one line of receiving antennas ( 28 ).

5. The device according to one of claims 1 to 4, at least the outer transmitting antennas ( 10 ) respectively having at least three lines of antennas ( 18 ) running parallel in Y-direction, and a middle line of the lines of line of antennas ( 18 ) of the transmitting antennas ( 10 ) respectively forming a phase center of the transmitting antennas ( 10 ), serving as a reference point for the distances.

6. The device according to one of claims 1 to 5, comprising a frequency generator ( 13 ) for producing signals which are issued by the transmitting antennas ( 10 ) of the first transmitting antenna array ( 36 ) in a first cycle and by the transmitting antennas ( 10 ) of the second transmitting antenna array ( 36 ) in a chronologically following second cycle.

7. The device according to claim 6, within the cycles the transmitting antennas ( 10 ) of one transmitting antenna array ( 36 ) respectively transmitting with different main beam directions consecutively in time.

8. The device according to one of claims 1 to 7, **characterized by** the number of receiving antennas being 8, 16 or 32.

9. The device according to one of the preceding claims, **characterized in that** both transmitting and receiving antennas are combined to form antenna arrays.

10. The device according to one of the preceding claims, comprising a display device for showing the position of the object.

11. A radar system comprising a device for determining a position of an object according to one of the preceding claims

12. A method for determining a position of an object, in particular a moving object, by using a device according to at least one of the preceding claims 1 to 10, comprising the procedural steps:

    - receiving a series of received signals transmitted consecutively in time by transmitting antennas of the device with different main beam directions and reflected on the object by a number of multiple receiving antennas of the device arranged in a row,
    - digitalizing the received signals,
    - combining the received signals by the digital beam forming method to form a bundled antenna beam,
- making a speed correction and a distance correction by means of a two-dimensional FFT by comparing received signals of that lines of antennas or by a Doppler-correction-matrix, which correspond to the bundled antenna beam,
- comparing the amplitude of the received signals with different main beam directions of the transmitter with the same distance value and the same speed value, and
- displaying the position of the object.

13. The method according to claim 12, **characterized in that** a speed correction is made in addition to the distance correction.

14. The method according to claim 12 or 13, **characterized in that** in order to achieve higher horizontal angular resolution in X-direction in an observation angle range the amplitudes of adjacent antenna beams are evaluated.

15. The method according to one of claims 12 to 14, **characterized in that** in order to achieve higher angular resolution in X-direction, the sum of and the difference between two adjacent antenna beams are evaluated.

**Revendications**

1. Dispositif de détermination d'une position d'un objet, en particulier d'un objet se déplaçant, avec

   - au moins deux groupes d'antennes émettrices connectables (36), sachant que chaque groupe d'antennes émettrices (36) comporte plusieurs antennes émettrices (10), qui se différencient l'une de l'autre en ce qui concerne leur direction de rayonnement principal,
   - un système d'antennes réceptrices avec une pluralité d'antennes réceptrices (20),

      sachant que les antennes émettrices (10) et les antennes réceptrices (20) sont exécutées sous la forme d'antennes planaires, qui s'étendent à l'intérieur d'un plan X-Y, sachant que les directions de rayonnement principal des antennes émettrices (10) se différencient en ce qui concerne la direction Y et sachant que les antennes réceptrices (20) sont disposées commençant d'une première à une dernière en direction X dans une rangée courante l'une à côté de l'autre, sachant que les groupes d'antennes émettrices (36) sont disposés de telle manière que la distance entre deux antennes émettrices (10) de direction de rayonnement principal identique concernant la direction Y,

      - est égale à la distance (D) entre les premières antennes réceptrices (20) et la dernière antenne réceptrice (20), ou
      - égale au total de la distance (D) entre les premières antennes réceptrices (20) et la dernière antenne réceptrice (20) et de la distance (dx) entre deux antennes réceptrices voisines (20), sachant que les antennes émettrices (10) sont disposées à une position quelconque latéralement ou opposées aux antennes réceptrices (20) à l'intérieur du plan X-Y, sachant que les distances se réfèrent respectivement aux centres de phase des antennes émettrices (10) et des antennes réceptrices (20) et respectivement à une direction courante allant de la dernière à la première.

2. Dispositif selon la revendication 1, sachant qu'au moins les antennes réceptrices extérieures (20) comportent respectivement au moins trois rangées d'antennes (28) passant parallèlement en direction Y et sachant qu'une rangée centrale des rangées d'antennes (28) forme un centre de phase de l'antenne réceptrice respective (20), lequel sert de point de référence des distances.

3. Dispositif selon l'une quelconque des revendications 1 à 2, sachant que la distance entre deux antennes réceptrices (20) voisines se réfère aux antennes réceptrices (20) qui comportent respectivement au moins trois rangées d'antennes (28) passant parallèlement en direction Y, sachant qu'une rangée centrale des rangées d'antennes (28) forme un centre de phase des antennes réceptrices respectives (20), lequel sert de point de référence des distances.

4. Dispositif selon la revendication 3, sachant que les antennes réceptrices situées à l'intérieur (20) ne comportent pas plus d'une rangée d'antennes réceptrices (28).

5. Dispositif selon l'une quelconque des revendications 1 à 4, sachant qu'au moins les antennes émettrices extérieures (10) comportent respectivement au moins trois rangées d'antennes (18) passant parallèlement dans une direction Y et sachant qu'une rangée centrale des rangées d'antennes (18) forme un centre de phase de l'antenne émettrice respective (10), lequel sert de point de référence des distances.

6. Dispositif selon l'une quelconque des revendications 1 à 5, avec un générateur de fréquence (13) pour produire des signaux, lesquels sont délivrés par les antennes émettrices (10) d'un premier groupe d'antennes émettrices (36) dans un premier cycle et par les antennes émettrices (10) d'un deuxième groupe d'antennes émettrices (36) dans un deuxième cycle suivant ensuite dans le temps.

7. Dispositif selon la revendication 6, sachant qu'à l'intérieur des cycles, les antennes émettrices (10) d'un groupe d'antennes émettrices (36) émettent respectivement l'une après l'autre dans le temps avec des directions de rayonnement principal différentes.

8. Dispositif selon l'une quelconque des revendications 1 à 7, **caractérisé par** un nombre de 8, 16 ou 32 antennes réceptrices.

9. Dispositif selon l'une quelconque des revendications précédentes, **caractérisé en ce que** tant les antennes émettrices que les antennes réceptrices sont réunies en groupes d'antennes.

10. Dispositif selon l'une quelconque des revendications précédentes avec un dispositif de reproduction pour représenter la position de l'objet.

11. Système de radar avec un dispositif de détermination d'une position d'un objet selon l'une quelconque des revendications précédentes.

12. Procédé de détermination d'une position d'un objet, en particulier d'un objet se déplaçant, en utilisant un dispositif selon au moins l'une quelconque des revendications 1-10, comprenant les étapes de procédé suivantes :

    - réception d'une suite de signaux de réception émis les uns derrière les autres dans le temps par les antennes émettrices du dispositif avec une direction de rayonnement principal différente et réfléchis sur l'objet par un nombre de plusieurs antennes réceptrices du dispositif disposées en une rangée,
    - numérisation des signaux de réception,
    - combinaison des signaux de réception selon la méthode de la formation numérique de signaux pour un rayonnement d'antenne mis en faisceau,
    - exécution d'une correction de vitesse et d'une correction d'éloignement au moyen d'un transistor à effet de champ (FFT) bidimensionnel par comparaison des signaux de réception des rangées d'antennes de ce type ou par une matrice de correction Doppler, lesquels correspondent au rayonnement d'antennes en faisceau,
    - comparaison d'amplitudes des signaux de réception pour une direction de rayonnement principal différente de l'émetteur à une valeur d'éloignement identique et une valeur de vitesse identique, et
    - représentation de la position de l'objet.

13. Procédé selon la revendication 12, **caractérisé en ce qu'**un correcteur de vitesse est exécuté en plus de la correction de distance.

14. Procédé selon la revendication 12 ou 13, **caractérisé en ce que** pour atteindre une résolution angulaire horizontale plus élevée en direction X dans une zone angulaire d'observation, les amplitudes des rayonnements d'antennes voisins sont évaluées.

15. Procédé selon l'une quelconque des revendications 12 à 14, **caractérisé en ce que** pour atteindre une résolution angulaire horizontale plus élevée en direction X, le total et la différence de deux rayonnements d'antennes voisins sont évalués.

Fig.1

EP 2 753 950 B1

Fig. 2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008061932 A1

- DE 102008052246 A1

**In der Beschreibung aufgeführte Nicht-Patentliteratur**

- **DR. WINFRIED MAYER.** Abbildender Radarsensor mit sendeseitig geschalteter Gruppenantenne. Cuvillier Verlag

- **N.KEES ; E.SCHMIDHAMMER ; J.DETLEFSEN.** Improvement of angular resolution of a millimeterwave imaging system by transmitter location multiplexing. *IEEE MTT-S Int. Microw. Symp. Dig.,* Mai 1995, vol. 2, 969-972